# EUROPEAN PATENT SPECIFICATION

(11) **EP 2 445 967 B1**
(45) Date of publication and mention of the grant of the patent: **22.03.2017**
(21) Application number: 09846374.8
(22) Date of filing: 26.06.2009
(51) Int. Cl.: C08L 75/04, C08K 5/3492, C08K 5/49, C08L 61/14, C08L 31/04

(54) **THERMOPLASTIC COMPOSITION WITH EPOXIDIZED NOVOLAC**
THERMOPLASTISCHE ZUSAMMENSETZUNG MIT EXPOXIDIERTEM NOVOLAK
COMPOSITION THERMOPLASTIQUE CONTENANT DU NOVOLAC ÉPOXYDÉ

(43) Date of publication of application: 02.05.2012
(73) Proprietor: Dow Global Technologies LLC, Midland, MI 48674 (US)
(72) Inventor: CHEN, Jing Given, Shanghai 201108 (CN); LI, Bin, Shanghai 201613 (CN); MA, Weiming Wayne, Shanghai 200433 (CN); TAI, Xiangyang, Shanghai 201100 (CN); QI, Yudong, Shanghai 201100 (CN); PANG, Kawai Peter, New Jersey 08502 (US); GUO, David H., Pomfret Center, CT 06259 (US); SUN, Yabin, Chengdu Sichuan 610041 (CN)
(74) Representative: Boult Wade Tennant
(86) International application number: PCT/CN2009/072480
(87) International publication number: WO 2010/148574

(56) References cited:
- EP-A1- 1 953 193
- EP-A1- 2 311 908
- WO-A1-00/20526
- WO-A1-03/027180
- WO-A1-2005/090455
- WO-A1-2010/075649
- WO-A1-2010/147761
- CN-A- 1 639 245
- CN-A- 101 313 030
- CN-A- 101 454 362
- JP-A- 2005 054 040
- US-A- 5 837 760
- US-A- 5 877 240
- US-A1- 2008 241 529
- LIANG YICONG: 'Study on the compatibility of ethylene-vinyl acetate rubber and thermoplastic polyurethane elastomer blends' CHINESE MASTER'S THESES FULL-TEXT DATABASE, ENGINEERING SCIENCE AND TECHNOLOGY I 15 April 2008, pages 1 - 90, XP008166235

## Description

### BACKGROUND

The present disclosure is directed to flame retardant thermoplastic compositions and flame retardant thermoplastic polyurethane compositions in particular.

A wide variety of applications require flame retardant thermoplastic compositions. In wire and cable applications, halogen additives have been used to give flame retardant properties to thermoplastic compositions such as thermoplastic polyurethane ("TPU") compositions. In recent years, however, ecological and health concerns regarding halogens are driving efforts to find viable halogen-free substitutes for thermoplastic compositions. Known halogen-free flame retardants, however, degrade the mechanical and physical properties of thermoplastics, limiting the scope of their application.

WO-A-2010/075649 describes compositions comprising a novolac polymer, an olefin-based polymer with an epoxy group, a filler and optionally a thermoplastic polymer.

US-A-2008/0241529 relates to flameproofed adhesive and sealing materials containing 0.1 to 99.9% by weight of adhesive or thermoplastic polymer and 0.1 to 99.9% by weight of flame proofing agent, wherein the flame proofing agent contains at least one phosphinic acid salt and/or one diphosphinic acid salt.

EP-A-1,953,193 discloses a flame-retardant resin composition comprising a resin component comprising (A) a thermoplastic polyurethane elastomer having a JIS hardness of A98 or less, and (B) an ethylene-vinyl acetate copolymer having a vinyl acetate unit content of 50 to 90% by weight, wherein a ratio by weight (A:B) is within a range of 40:60 to 90:10, and (D) a metal hydroxide in a ratio of 40 to 250 parts by weight with respect to 100 parts by weight of the resin component.

WO-A-03/027180 describes flame-retarding styrenic thermoplastic resin compositions comprising a) 100 weight parts of a base resin comprising i) 10 to 50 weight parts of a rubber-modified styrene-containing graft copolymer; ii) 5 to 20 weight parts of phenol novolac resin, and iii) 20 to 70 weight parts of a styrene containing copolymer; and b) 5 to 20 weight parts of an aromatic phosphate.

WO-A-2010/147761 describes colour stable, halogen-free, flame retardant compositions comprising, based on the weight of the composition: A. 10-95 weight percent of a thermoplastic polyurethane polymer; B. 3-50 weight percent of a phosphorus-based flame retardant; and C. 0.1 to 10 weight percent of a low molecular weight epoxide additive other than a novolac polymer or an olefin based polymer comprising an epoxy group.

EP-A-2,311,906 discloses flame-retardant thermoplastic resin compositions wherein two kinds of specific poly(phosphate) compounds together with a phosphoric acid ester compound are compounded with a thermoplastic resin composition having a thermoplastic polyurethane elastomer and an ethylene polymer and/or an ethylene copolymer as the main components.

JP-A-2005/054040 describes a flame-retardant thermoplastic polyurethane composition, containing no halogen, which comprises (A) a thermoplastic polyurethane, (B) a phosphorus-based flame retardant and (C) an epoxy compound having in the molecule two or more epoxy groups.

US-A-5,877,240 discloses a size composition for treating fibers useful to reinforce polymeric materials comprising: a) a first film former comprising a thermoplastic polyurethane, b) a second film former comprising a mixture of bisphenol F and an epoxy-cresol-novolac resin; c) one or more silane coupling agents; and d) water.

WO-A-00/20526 describes compositions comprising a curable epoxy-containing material, a first thermoplastic polyurethane component and a curative for the epoxy-containing material.

WO-A-2005/090455 describes a method to adhere an expandable flexible polyurethane to a substrate.

Desirable would be a halogen-free thermoplastic composition with properties suitable for wire and cable applications and flexible wire/cable applications in particular.

### SUMMARY

The present disclosure provides a composition comprising:
from 15 wt% to 60 wt% of a thermoplastic polyurethane (TPU);
from 15 wt% to 40 wt% of a flame retardant selected from the group consisting of (a) a blend of a metal hydrate and a phosphorus-based flame retardant, (b) a blend of nitrogen/phosphorus-based flame retardant and (c) a phosphorus-based flame retardant, and a blend of a metal hydrate and a polyphosphate flame retardant; and
from 0.01 wt% to 20 wt% of an epoxidized novolac resin.

The present disclosure provides another composition. In a preferred embodiment, a composition is provided which includes a polar olefin-based polymer.

In a preferred embodiment, the polar olefin-based polymer is ethylene vinyl acetate.

The present disclosure provides an article. In an embodiment, an article is provided which includes at least one component composed of a composition as described above. The composition includes a thermoplastic polyurethane, a flame retardant, and an epoxidized novolac resin.

In a preferred embodiment, the article includes a metal conductor and a coating on the metal conductor. The coating contains the composition.

An advantage of the present disclosure is the provision of a flame-retardant composition that is halogen-free with flexibility suitable for flexible wire and/or cable applications.

An advantage of the present disclosure is a halogen-free, flame-retardant composition with suitable tensile strength for wire and/or cable applications.

### DETAILED DESCRIPTION

All references to the Periodic Table of the Elements refer to the Periodic Table of the Elements published and copyrighted by CRC Press, Inc., 2003. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, melt index, etc., is from 100 to 1,000, then the intent is that all individual values, such as 100, 101, 102, etc., and sub ranges, such as 100 to 144, 155 to 170, 197 to 200, etc., are expressly enumerated. For ranges containing values which are less than one or containing fractional numbers greater than one (*e.g*., 1.1, 1.5, etc.), one unit is considered to be 0.0001, 0.001, 0.01 or 0.1, as appropriate. For ranges containing single digit numbers less than ten (*e.g.,* 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the amounts of TPU, flame retardants, UV-stabilizer and various other components in the composition, and the various characteristics and properties by which these components are defined.

As used with respect to a chemical compound, unless specifically indicated otherwise, the singular includes all isomeric forms and vice versa (for example, "hexane", includes all isomers of hexane individually or collectively). The terms "compound" and "complex" are used interchangeably to refer to organic-, inorganic- and organometal compounds. The term, "atom" refers to the smallest constituent of an element regardless of ionic state, that is, whether or not the same bears a charge or partial charge or is bonded to another atom. The term "amorphous" refers to a polymer lacking a crystalline melting point as determined by differential scanning calorimetry (DSC) or equivalent technique.

The terms "comprising", "including", "having" and their derivatives are not intended to exclude the presence of any additional component, step or procedure, whether or not the same is specifically disclosed. In order to avoid any doubt, all compositions claimed through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

"Composition" and like terms mean a mixture or blend of two or more components.

"Blend," "polymer blend" and like terms mean a blend of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art.

The term "polymer" is a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, terpolymers (which usually refers to polymers prepared from three different types of monomers or comonomers), tetrapolymers (which usually refers to polymers prepared from four different types of monomers or comonomers), and the like.

The present disclosure is directed to flame retardant compositions that are thermoplastic, halogen-free and exhibit excellent insulative, mechanical, and processability properties. The present compositions may have mechanical and/or processability properties similar to, or substantially similar to, PVC.

In an embodiment, a composition is provided. The composition includes a thermoplastic polyurethane, a flame retardant, and an epoxidized novolac polymer.

A "thermoplastic polyurethane" (or "TPU"), as used herein, is the reaction product of a polyisocyanate, one or more polymeric diol(s), and optionally one or more difunctional chain extender(s). The TPU may be prepared by the prepolymer, quasi-prepolymer, or one-shot methods.

The polyisocyanate may be a di-isocyanate. The di-isocyanate forms a hard segment in the TPU and may be an aromatic, an aliphatic, and a cycloaliphatic di-isocyanate and combinations of two or more of these compounds. A nonlimiting example of a structural unit derived from di-isocyanate (OCN-R-NCO) is represented by formula (I) below:

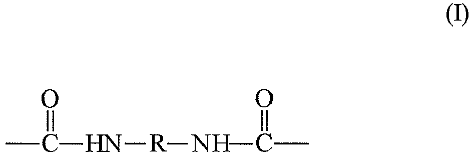

in which R is an alkylene, cycloalkylene, or arylene group. Representative examples of these di-isocyanates can be found in USP 4,385,133, 4,522,975 and 5,167,899. Nonlimitng examples of suitable di-isocyanates include 4,4'-di-isocyanatodipheny-lmethane, p-phenylene di-isocyanate, 1,3-bis(isocyanatomethyl)-cyclohexane, 1,4-di-isocyanato-cyclohexane, hexamethylene di-isocyanate, 1,5-naphthalene di-isocyanate, 3,3'-dimethyl-4,4'-biphenyl di-isocyanate, 4,4'-di-isocyanato-dicyclohexylmethane, 2,4-toluene di-isocyanate, and 4,4'-di-isocyanato-diphenylmethane.

The polymeric diol forms soft segments in the resulting TPU. The polymeric diol has a molecular weight (number average) in the range from 200 to 10,000 g/mole. More than one polymeric diol can be employed. Nonlimiting examples of suitable polymeric diols include polyether diols (yielding a "polyether TPU"); polyester diols (yield a "polyester TPU"); hydroxy-terminated polycarbonates (yielding a "polycarbonate TPU"); hydroxy-terminated polybutadienes; hydroxy-terminated polybutadiene-acrylonitrile copolymers; hydroxy-terminated copolymers of dialkyl siloxane and alkylene oxides, such as ethylene oxide, propylene oxide; natural oil diols, and any combination thereof. One or more of the foregoing polymeric diols may be mixed with an amine-terminated polyether and/or an amino-terminated polybutadiene-acrylonitrile copolymer.

The difunctional extender can be aliphatic straight and branched chain diols having from 2 to 10 carbon atoms, inclusive, in the chain. Illustrative of such diols are ethylene glycol, 1,3-propanediol, 1,4-butanediol, 1,5-pentanediol, 1,6-hexanediol, neopentyl glycol, and the like; 1,4-cyclohexanedimethanol; hydroquinonebis-(hydroxyethyl)ether; cyclohexylenediols (1,4-, 1,3-, and 1,2-isomers), isopropylidenebis(cyclohexanols); diethylene glycol, dipropylene glycol, ethanolamine, N-methyl-diethanolamine, and the like; and mixtures of any of the above. As noted previously, in some cases, minor proportions (less than 20 equivalent percent) of the difunctional extender may be replaced by trifunctional extenders, without detracting from the thermoplasticity of the resulting TPU; illustrative of such extenders are glycerol, trimethylolpropane, and the like.

The chain extender is incorporated into the polyurethane in amounts determined by the selection of the specific reactant components, the desired amounts of the hard and soft segments, and the index sufficient to provide good mechanical properties, such as modulus and tear strength. The polyurethane compositions used in the practice of this invention may contain from 2 to 25, preferably from 3 to 20 and more preferably from 4 to 18, wt% of the chain extender component.

Optionally, small amounts of monohydroxyl functional or monoamino functional compounds, often termed "chain stoppers," may be used to control molecular weight. Illustrative of such chain stoppers are the propanols, butanols, pentanols, and hexanols. When used, chain stoppers are typically present in minor amounts from 0.1 to 2 weight percent of the entire reaction mixture leading to the polyurethane composition.

The equivalent proportions of polymeric diol to said extender can vary considerably depending on the desired hardness for the TPU product. Generally speaking, the equivalent proportions fall within the respective range of from 1:1 to 1:20, preferably from 1:2 to 1:10. At the same time the overall ratio of isocyanate equivalents to equivalents of active hydrogen containing materials is within the range of 0.90:1 to 1.10:1, and preferably, 0.95:1 to 1.05:1.

Additives may be used to modify the properties of the polyurethane used in the practice of this invention. Additives may be included in the conventional amounts as already known in the art and literature. Usually additives are used to provide specific desired properties to the polyurethanes such as various antioxidants, ultraviolet inhibitors, waxes, thickening agents and fillers. When fillers are used, they may be either organic or inorganic, but are generally inorganic such as clay, talc, calcium carbonate, silica and the like. Also, fibrous additives, such as glass or carbon fiber, may be added to impart certain properties.

In one embodiment, the TPU has a density greater than, or equal to, 0.90 g/cc, or greater than or equal to 0.95 g/cc, or greater than or equal to 1.00 g/cc. In another embodiment, the TPU has a density less than or equal to 1.30 g/cc, or less than or equal to 1.25 g/cc, and or less than or equal to 1.20 g/cc. In another embodiment, the TPU has a density from 0.90 g/cc to 1.30 g/cc, or from 0.95 g/cc to 1.25 g/cc, or from 1.00 g/cc to 1.20 g/cc.

In one embodiment, the TPU has a melt index greater than or equal to 0.1 g/10 min, or greater than or equal to 0.5 g/10 min, or greater than or equal to 1 g/10 min (as measured by ASTM D-1238-04, 190°C, 8.7kg). In another embodiment, the TPU has a melt index less than or equal to 100 g/10 min, or less than or equal to 50 g/10 min, or less than or equal to 20 g/10 min, (ASTM D-1238-04, 190°C, 8.7kg). In another embodiment, the TPU has a melt index from 0.1 g/10 min to 100 g/10 min, or from 0.5 g/10 min to 50 g/10 min, or from 1 g/10 min to 20 g/10 min.

Nonlimiting examples of suitable TPUs include the PELLETHANE™ thermoplastic polyurethane elastomers available from Lubrizol Advanced Materials; ESTANE™ thermoplastic polyurethanes, TECOFLEX™ thermoplastic polyurethanes, CARBOTHANE™ thermoplastic polyurethanes, TECOPHILIC™ thermoplastic polyurethanes, TECOPLAST™ thermoplastic polyurethanes, and TECOTHANE™ thermoplastic polyurethanes, all available from Noveon; ELASTOLLAN™ thermoplastic polyurethanes and other thermoplastic polyurethanes available from BASF; and commercial thermoplastic polyurethanes available from Bayer, Huntsman and Merquinsa.

The composition contains a lower amount of 15 wt %, or 20 wt %, or 25 wt %, or 30 wt % of the TPU, and an upper amount of TPU of 60 wt %, or 50 wt %, or 40 wt %. Weight percent is based on the total weight of the composition.

The present composition includes a flame retardant. The flame retardant can be a solid, a liquid, and combinations thereof. The flame retardant can include a a nitrogen/phosphorus-based (N/P-based) flame retardant, a phosphorus-based flame retardant, a metal-containing flame retardant, and any combination thereof.

In an embodiment, the flame retardant includes a N/P-based flame retardant. Nonlimiting examples of suitable N/P-based flame retardants include melamine phosphate, melamine pyrophosphate, melamine polyphosphate, piperazine pyrophosphate, melamine pyrophosphate, a phosphonitrilic chloride, a phosphorus ester amide, a phosphoric acid amide, a phosphonic acid amide, a phosphinic acid amide, ammonium polyphosphate (APP), piperizine polyphosphate, and any combination thereof.

In an embodiment, the flame retardant includes a phosphorus-based flame retardant. Nonlimiting examples of suitable phosphorus-based flame retardants include an organic phosphonic acid, a phosphonate, a phosphinate, a phosphonite, a phosphinite, a phosphine oxide, a phosphine, a phosphite or a phosphate, and any combination of the foregoing. Nonlimiting examples of suitable phosphorus-based flame retardants include phenylbisdodecyl phosphate, phenylbisneopentyl phosphate, phenyl ethylene hydrogen phosphate, phenyl-bis(3,5,5'-trimethylhexyl phosphate), ethyldiphenyl phosphate, 2-ethylhexyl di(p-tolyl) phosphate, diphenyl hydrogen phosphate, bis(2-ethyl-hexyl) p-tolylphosphate, tritolyl phosphate, bis(2-ethylhexyl)-phenyl phosphate, tri(nonylphenyl) phosphate, phenylmethyl hydrogen phosphate, di(dodecyl) p-tolyl phosphate, tricresyl phosphate, triphenyl phosphate, triphenyl phosphate, dibutylphenyl phosphate, 2-chloroethyldiphenyl phosphate, p-tolyl bis(2,5,5'-trimethylhexyl) phosphate, 2-ethylhexyldiphenyl phosphate, and diphenyl hydrogen phosphate. The phosphorus-based flame retardant can be a solid, a liquid, and combinations thereof.

In an embodiment, the flame retardant is selected from triphenyl phosphate (TPP), resorcinol diphenyl phosphate (RDP) (liquid), bisphenol A polyphosphate (BAPP) (liquid), bisphenol A diphenyl phosphate (BPADP), bisphenol A diphosphate (BADP), ammonium polyphosphate (APP), piperizine polyphosphate, (2,6-dimethylphenyl) 1,3-phenylene bisphosphate, and any combination thereof.

In an embodiment, the flame retardant includes a metal-containing flame retardant. Nonlimiting examples of suitable metal-containing flame retardants include metal hydrates such as magnesium hydroxide, aluminum trihydrate (Al₂O₃ H₂O; (ATH), also referred to as aluminum hydroxide Al(OH)₃), huntite, hydromagnesite, antimony trioxide, potassium hydroxide, zirconium oxide, titanium oxide, zinc oxide, and/or magnesium oxide; metal carbonates such as magnesium carbonate and/or calcium carbonate; barium and/or borate based compounds such as barium sulfate, barium borate, meta-barium borate, zinc borate, and/or meta-zinc borate; and other flame retardants such as aluminum anhydrate, molybdenum disulfide, clay, diatomite, kaolinite, montmorilonite, hydrotalcite, talc, silica (e.g., precipitated silica and silicates, fumed silica, etc.), white carbon, celite, asbestos, ground minerals, and/or lithopone. In a further embodiment, the metal-containing flame retardant may provide flame retardancy alone or in combination with any of the foregoing flame retardants.

In an embodiment, the flame retardant is halogen-free.

The composition contains a lower amount of about 15 wt %, or 20 wt %, or 25 wt %, or 30 wt %, of the flame retardant and an upper amount of 40 wt % of the flame retardant. Weight percent is based on the total weight of the composition.

In an embodiment, the flame retardant is a blend of two or more flame retardants as disclosed above. In one embodiment, the flame retardant is a blend of a metal-containing flame retardant and a phosphorus-based flame retardant. In another embodiment, the flame retardant is a blend of (i) from 10 wt % to 20 wt % piperazine polyphosphate and a melamine derivative (solid), and (ii) from 5 wt % to 15 wt % bisphenol A polyphosphate (liquid). In another embodiment, the flame retardant is a blend of a N/P-based flame retardant and a phosphorus-based flame retardant.

In another embodiment, the flame retardant is a blend of a metal-containing flame retardant and a polyphosphate flame retardant. The metal-containing flame retardant may be any metal-containing flame retardant as disclosed above. Nonlimiting examples of suitable polyphosphate flame retardants include bisphenol A polyphosphate, ammonium polyphosphate, melamine polyphosphate, piperizine polyphosphate, and any combination thereof.

The present composition includes an epoxidized novolac resin. An "epoxidized novolac resin," as used herein, is the reaction product of epichlorohydrin and phenol novolac polymer in an organic solvent. Nonlimiting examples of suitable organic solvents include acetone, methyl ethyl ketone, methyl amyl ketone, and xylene. The epoxidized novolac resin may be a liquid, a semi-solid, a solid, and combinations thereof. The epoxidized novolac resin is a char forming agent in the composition.

"Epichlorohydrin," as used herein, is chloropropylene oxide with the structure (II) below.

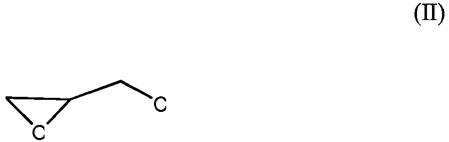

As used herein, a "phenol novolac polymer" is a polymer produced by reaction of (a) one or more phenol compounds and (b) an aldehyde and/or an acetone.

Nonlimiting examples of suitable phenols include phenol, cresol, xylenol, naphthol, alkylphenol, and/or any other hydrocarbyl substituted phenol. Nonlimiting examples of suitable aldehydes include formaldehyde, paraformaldehyde, acetaldehyde, n-butylaldehyde, glutaraldehyde, crotonaldehyde, and/or glyoxal.

In an embodiment, the phenol novolac polymer has the structure (III):

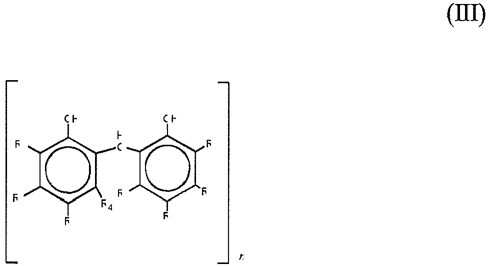

wherein n is an integer from 1 to 1000. R₁, R₂, R₃, R₄ R₅, R₆, R₇, and R₈, are the same or different. Each of R₁-R₈ is selected from hydrogen, a hydrocarbyl group having 1 to 20 carbon atoms, and a hydroxyl group. As used herein, the term "hydrocarbyl" and "hydrocarbon" refer to substituents containing only hydrogen and carbon atoms, including branched or unbranched, saturated or unsaturated, cyclic, polycyclic or acyclic species, and combinations thereof. Nonlimiting examples of hydrocarbyl groups include alkyl-, cycloalkyl-, alkenyl-, alkadienyl-, cycloalkenyl-, cycloalkadienyl-, aryl-, aralkyl, alkylaryl, and alkynyl- groups.

In an embodiment, the epoxidized novolac has the structure (IV) below: 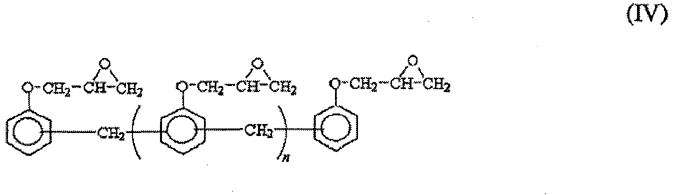 wherein n is an integer from 1 to 1000.

The composition contains epoxidized novolac resin in a lower limit of about 0.01 wt %, or 0.1 wt %, or 0.5 wt % and an upper amount of epoxidized novolac resin of 20 wt %, or 10 wt %, or 8 wt %.

In an embodiment, the composition is formed into a plaque. The plaque has a tensile strength from 5.0 MPa to 20.0 MPa as measured in accordance with ASTM D638.

In an embodiment, the plaque has a tensile elongation at break from 100% to 500% as measured in accordance with ASTM D638.

In an embodiment, the composition is halogen-free.

In an embodiment, the composition has a V-1 rating or better as determined in accordance with the UL-94 flame test.

The present disclosure provides another composition. In an embodiment, a composition is provided which includes a TPU, a polar olefin-based polymer, a flame retardant, and an epoxidized novolac resin. The TPU, flame retardant, and epoxidized novolac resin may by any respective TPU, flame retardant, and epoxidized novolac resin as disclosed herein.

As used herein, an "olefin-based polymer" is a polymer containing, in polymerized form, a majority weight percent of an olefin, for example ethylene or propylene, based on the total weight of the polymer. Nonlimiting examples of olefin-based polymers include ethylene-based
polymers and propylene-based polymers. A "polar olefin-based polymer," is an olefin-based polymer containing one or more polar groups (sometimes referred to as polar functionalities). A "polar group," as used herein, is any group that imparts a bond dipole moment to an otherwise essentially nonpolar olefin molecule. Exemplary polar groups include carbonyls, carboxylic acid groups, carboxylic acid anhydrate groups, carboxylic ester groups, epoxy groups, sulfonyl groups, nitrile groups, amide groups, silane groups and the like, and these groups can be introduced into the olefin-based polymer either through grafting or copolymerization.

Nonlimiting examples of polar olefin-based polymers include ethylene/acrylic acid (EAA), ethylene/methacrylic acid (EMA), ethylene/acrylate or methacrylate, ethylene/vinyl acetate (EVA), poly(ethylene-co-vinyltrimethoxysilane) copolymer, maleic anhydrate- or silane-grafted olefin polymers, poly(tetrafluoroethylene-alt-ethylene) (ETFE), poly(tetrafluoroethylene-co-hexafluoro-propylene) (FEP), poly(ethylene-co-tetrafluoroethylene-co-hexafluoropropylene (EFEP), poly(vinylidene fluoride) (PVDF), poly(vinyl fluoride) (PVF), and the like. Preferred polar olefin polymers include DuPont ELVAX™ ethylene vinyl acetate (EVA) resins, AMPLIFY™ ethylene ethyl acrylate (EEA) copolymer from The Dow Chemical Company, PRIMACOR™ ethylene/acrylic acid copolymers from The Dow Chemical Company, and SI-LINK™ poly(ethylene-co vinyltrimethoxysilane) copolymer from The Dow Chemical Company.

In an embodiment, the polar olefin-based polymer is ethylene vinyl acetate (EVA). The EVA has a vinyl acetate content from 3 wt% to 45 wt %, based on the weight of the EVA. The EVA may form a continuous phase (or matrix) or a co-continuous phase with the TPU. The flame retardant and the epoxy novolac resin are dispersed throughout the continuous phase and/or the co-continuous phase.

In an embodiment, the composition contains a lower amount of 1 wt %, or 10 wt %, or 20 wt % or 30 wt % of the EVA and an upper amount of EVA of 50 wt %, or 40 wt %, or 30 wt %. In a further embodiment, the composition includes from 20 wt % to 25 wt % of EVA. Weight percent is based on the total weight of the composition.

In an embodiment, the composition includes from 30 wt % to 50 wt % TPU, from 5 wt % to 25 wt % ethylene vinyl acetate, from 15 wt % to 40 wt % flame retardant, and from 0.1 wt % to 5 wt % epoxy novolac resin.

In an embodiment, the composition is formed into a plaque. The plaque has a tensile strength from 5.0 MPa to 20.0 MPa as measured in accordance with ASTM D638.

In an embodiment, the plaque has a tensile elongation at break from 100% to 500% as measured in accordance with ASTM D638.

In an embodiment, the composition is halogen-free.

In an embodiment, the composition has a V-1 rating or better as determined in accordance with the UL-94 flame test.

Any of the foregoing compositions may include one or more of the following additives: an anti-drip agent, a hindered amine light stabilizer (having at least one secondary or tertiary amine group) ("HALS"), UV light absorbers (such as o-hydroxyphenyltriazines), antioxidants, curing agents, cross linking co-agents, boosters and retardants, processing aids, fillers, coupling agents, antistatic agents, nucleating agents, slip agents, plasticizers, lub icants, viscosity control agents, tackifiers, antiblocking agents, surfactants, extender oils, acid scavengers, metal deactivators, and any combination thereof.

In an embodiment, the present composition includes an anti-drip agent. The anti-drip agent prevents the composition from drip when exposed to flame. The anti-drip agent may be any halogen-free anti-drip agent as known in the art. Nonlimiting examples of suitable anti-drip agents include fluororesin, such as poly(tetrafluoroethylene), polyvinylidene fluoride or tetrafluoroethylene/ hexafluoropropylene copolymers and ethylene/tetrafluoroethylene copolymers, teflongrafted styrene-acrylonitrile copolymer (T-SAN), fluorinated polyolefin, lithium, sodium, potassium or cesium salt of 1,1,2,2-tetrafluoroethanesulfonate or 1,1,2,3,3,3-hexafluoropropanedulfonate. Further nonlimiting examples of suitable anti-drip agents includes silicone resins, silicone oil, phosphoric acid, phosphorous acid, hypophosphorous acid, hypophosphoric acid, phosphinic acid, phosphonic acid, metaphosphoric acid, hexanetaphosphoric acid, thiophosphoric acid, fluorophosphoric acid, difluorophosphoric acid, fluorophosphorous acid, difluorophosphorous acid, fluorohypophosphorous acid and fluorohypophosphoric acid. The anti-drip agent may be one or more of any of the aforementioned anti-drip agents. In an embodiment, the anti-drip agent is halogen-free.

In an embodiment, the present composition includes a HALS. Nonlimiting examples of suitable HALS include TINUVIN® 770 (bis-(2,2,6,6-tetramethyl-4-piperidinyl)sebacate), TINUVIN® 144 (bis-(1,2,2,6,6-pentamethyl-4-piperidinyl)-2-n-butyl-2-(3,5-di-tert-butyl-4-hydroxybenzyl)malonate), and SANDUVOR® PR-31 (propanedioic acid, [(4-methoxyphenyl)-methylene]-bis-(1,2,2,6,6-pentamethyl-4-piperidinyl)ester).

In an embodiment, the present composition includes an antioxidant. Nonlimiting examples of suitable antioxidants include hindered phenols such as tetrakis[methylene(3,5-di-tert-butyl-4-hydroxyhydro-cinnamate)] methane; bis[(beta-(3,5-ditert-butyl-4-hydroxybenzyl)-methylcarboxyethyl)]sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alpha-dimethylbenzyl)diphenylamine, diphenyl-p-phenylenediamine, mixed di-aryl-p-phenylenediamines, and other hindered amine anti-degradants or stabilizers. Antioxidants can be used in amounts of 0.1 to 5 wt % based on the weight of the composition.

In an embodiment, the present composition includes a processing aid. Nonlimiting examples of suitable processing aids include metal salts of carboxylic acids such as zinc stearate or calcium stearate; fatty acids such as stearic acid, oleic acid, or erucic acid; fatty amides such as stearamide, oleamide, erucamide, or N,N'-ethylene bis-stearamide; polyethylene wax; oxidized polyethylene wax; polymers of ethylene oxide; copolymers of ethylene oxide and propylene oxide; vegetable waxes; petroleum waxes; non ionic surfactants; and polysiloxanes. Processing aids can be used in amounts of 0.05 to 5 wt% based on the weight of the composition.

In an embodiment, the composition is drip-free. As used herein, a "drip-free composition" is a composition that, when exposed to heat or flame, produces no vertical drop of molten particles which ignite cotton located under the composition.

The present composition(s) may comprise two or more embodiments disclosed herein.

The present disclosure provides an article. In an embodiment, an article is provided which includes a component comprising the present composition. In particular, the article includes a component composed of a composition including a TPU, a flame retardant, an expoxidized novolac resin, and optionally a polar olefin-based polymer.

In an embodiment, the article includes a metal conductor and a coating on the metal conductor. This forms a coated metal conductor. A "metal conductor," as used herein, is at least one metal wire and/or at least one metal cable. The coated metal conductor may be flexible, semirigid, or rigid.

A coating (also referred to as a "jacket" or a "sheath") is on the metal conductor. The coating includes the composition. The composition may be any composition as disclosed herein. As used herein, "on" includes direct contact or indirect contact between the coating and the metal conductor. "Direct contact" is a configuration whereby the coating immediately contacts the metal conductor, with no intervening layer(s) and/or no intervening material(s) located between the coating and the metal conductor. "Indirect contact" is a configuration whereby an intervening layer(s) and/or an intervening material(s) is located between the metal conductor and the coating. The coating may wholly or partially cover or otherwise surround or encase the metal conductor. The coating may be the sole component surrounding the metal conductor. Alternatively, the coating may be one layer of a multilayer jacket or sheath encasing the metal conductor.

In an embodiment, the article is a coated metal conductor. Nonlimiting examples of suitable coated metal conductors include a flexible wire such as flexible wiring for consumer electronics; a power cord/cable; a cell phone charger wire; a computer cord such as a computer charger wire; a computer data cord; and an accessory cord such as electronic accessory cords.

In an embodiment, the coated metal conductor has a VW-1 rating determined in accordance with method 1080 of UL-1581.

The article may comprise two or more embodiments disclosed herein.

Nonlimiting embodiments of the compositions and the article are provided below.

### Compounding

The present composition can be prepared by compounding the individual components. Nonlimiting examples of suitable compounding equipment include internal batch mixers, such as a Banbury™ or Bolling™ internal mixer. Alternatively, continuous single, or twin screw, mixers can be used, such as Farrel™ continuous mixer, a Werner and Pfleiderer™ twin screw mixer, or a Buss™ kneading continuous extruder. The type of mixer utilized, and the operating conditions of the mixer, will affect properties of the composition such as viscosity, volume resistivity, and extruded surface smoothness.

An article such as a wire or a cable containing an insulation layer and/or a jacket (i.e., a coated metal conductor) comprising the composition disclosed herein can be prepared with various types of extruders, e.g., single or twin screw types. A description of a conventional extruder can be found in U.S. Patent No. 4,857,600. An example of coextrusion and an extruder therefore can be found in U.S. Patent No. 5,575,965. A typical extruder has a hopper at its upstream end and a die at its downstream end. The hopper feeds into a barrel, which contains a screw. At the downstream end, between the end of the screw and the die, there is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of 15:1 to 30:1. In wire coating where the polymeric insulation is crosslinked after extrusion, the cable often passes immediately into a heated vulcanization zone downstream of the extrusion die. The heated cure zone can be maintained at a temperature in the range of 200°C to 350°C, preferably in the range of 170°C to 250°C. The heated zone can be heated by pressurized steam, or inductively heated pressurized nitrogen gas.

The wire and cable constructions (i.e., a coated metal conductor) of this disclosure are made by extruding the present composition onto the bundle of insulated conductors to form a coating (or a jacket) around the insulated conductors. The thickness of the jacket depends on the requirements of the desired end use application. Typical thickness of the jacket is from 0.025 cm to 0.508 cm (0.010 inches to 0.200 inches) and more typical from 0.0508 cm to 0.127 cm (0.020 inches to 0.050 inches). The present composition may be extruded into the jacket from previously made composition. Usually the present composition is in the form of pellets for easy feeding into the extruder. The wire and cable jacket may be extruded directly from the compounding extruder without going through the separate step of pelletizing the present composition. This one-step compounding/extrusion process would eliminate one heat history step for the composition.

Nonlimiting embodiments of the composition and the article are provided below.

In an embodiment, a composition is provided comprising from 15 wt% to 60 wt% of a thermoplastic polyurethane (TPU);
from 15 wt% to 40 wt% of a flame retardant selected from the group consisting of (a) a blend of a metal hydrate and a phosphorus-based flame retardant, (b) a blend of a
nitrogen/phosphorus-based flame retardant and (c) a phosphorus-based flame retardant, and a blend of a metal hydrate and a polyphosphate flame retardant; and
from 0.01 wt% to 20 wt% of an epoxidized novolac resin.

In an embodiment, the flame retardant is selected from the group consisting of a blend of a metal-containing flame retardant and a phosphorus-based flame retardant, a blend of a nitrogen/phosphorus-based flame retardant and a phosphorus-based flame retardant, and a blend of metal-containing flame retardant and a polyphosphate flame retardant.

In an embodiment, the composition comprises a component selected from the group consisting of an anti-drip agent, an antioxidant, and combinations thereof.

In an embodiment, the composition is a plaque having a tensile strength from 5.0 MPa to 20.0 MPa as measured in accordance with ASTM D638.

In an embodiment, the composition is a plaque having a tensile elongation at break from 100% to 500% as measured in accordance with ASTM D638.

In an embodiment, the composition is halogen-free.

In an embodiment, the composition has a V-1 rating or better as determined in accordance with the UL-94 flame test.

The disclosure provides another composition. In an embodiment, a composition is provided which comprises a thermoplastic polyurethane (TPU); a polar olefin-based polymer; a flame retardant; and an epoxidized novolac resin.

In an embodiment, the composition comprises a component selected from the group consisting of an anti-drip agent, an antioxidant, and combinations thereof.

In an embodiment, the composition is a plaque having a tensile strength from 5.0 MPa to 20.0 MPa as measured in accordance with ASTM D638.

In an embodiment, the composition is halogen-free.

In an embodiment, the composition has a V-1 rating or better as determined in accordance with the UL-94 flame test.

The present disclosure provides an article. In an embodiment, an article comprises at least one component composed of a composition comprising a thermoplastic polyurethane, a flame retardant, and an epoxidized novolac resin.

In an embodiment, the composition of the article comprises a polar olefin-based polymer.

In an embodiment, the article comprises a metal conductor and a coating on the metal conductor, the coating comprising the composition.

In an embodiment, the article comprises a coated metal conductor and the coated metal conductor is selected from the group consisting of a flexible wire, a cell phone charger wire, a power cord, a computer cord, a power cord, an accessory cord, and combinations thereof.

In an embodiment, the article is a coated metal conductor and has a VW-1 rating as determined in accordance with method 1080 of UL-1581.

### TEST METHODS

Tensile elongation at break is measured in accordance with ASTM D638. Tensile elongation is measured by setting crosshead speed to 50 mm/minute with the % elongation measured using an extensometer with a 25 mm initial gauge length to measure strain to break and tensile properties calculated via standard calculation using load and specimen cross-sectional area with ASTM D638 as the method.

Tensile strength at break is measured in accordance with ASTM D638.

Secant 2% modulus is measured in accordance with ASTM D638. For secant modulus, a 58 mm (2.25") initial jaw separation is used, and a 50 mm/minute (2.0 ipm) testing speed to provide about a 100%/minute specimen strain rate. The 1% secant modulus data is determined using a crosshead displacement method at 1% strain (0.01 minute = 0.6 second deflection) with ASTMD638 as the method.

UL-94 is the Underwriters' Laboratory (UL) Bulletin 94 Tests for Flammability of Plastic Materials for Parts in Devices and Appliances. The material tested is UL 94 V-0 classified if:
- None of the five test specimens burn for over 10 seconds at any time when the burner flame is removed.
- The total burning time of the 10 ignition test does not exceed 50 seconds.
- No test specimen burns either with a flame or afterglow to the clamp.
- No burning drops should fall which would cause the cotton underneath to ignite from any test specimen.
- The afterglow burning of no test specimen exceeds 30 seconds.

The material tested is UL 94 V-1 classified if:
- None of the five test specimens burn for over 30 seconds at any time when the burner flame is removed.
- The total burning time of the 10 ignition test does not exceed 250 seconds.
- No test specimen burns either with a flame or afterglow to the clamp.
- No burning drops should fall which would cause the cotton underneath to ignite from any test specimen.
- The afterglow burning of no test specimen exceeds 60 seconds.

The material tested is UL 94 V-2 classified if:
- None of the five test specimens burn for over 30 seconds at any time when the burner flame is removed.
- The total burning time of the 10 ignition test does not exceed 250 seconds.
- No test specimen burns either with a flame or afterglow to the clamp.
- Only such burning pieces may fall from the test specimen, which burn only momentarily, and of which some ignite the cotton underneath.
- The afterglow burning of no test specimen exceeds 60 seconds.

VW-1 is an Underwriters' Laboratory (UL) flame rating for wire and sleeving. It denotes "Vertical Wire, Class 1 ", which is the highest flame rating a wire or sleeve can be given under the UL 1441 specification. The test is performed by placing the wire or sleeve in a vertical position. A flame is set underneath it for a period of time, and then removed. The characteristics of the sleeve are then noted. The VW-1 flame test is determined in accordance with method 1080 of UL-1581.

By way of example, and not by limitation, examples of the present disclosure are provided

### EXAMPLES

**Table 1**

| Component | Material |
|---|---|
| A1 | Pellethane™ 2103-90AE, polytetramethylene glycol ether TPU; from Dow Chemical Company |
| A2 | Pellethane™ 2355-75A, polyester polyadipate TPU, from Dow Chemical Company |
| B1 | Elvax™ 265, EVA with 28% VA, from Du Pont Company |
| C | Aluminum hydroxide (ATH), grade H42M, from Showa Chemical |
| D1 | Resorcinol Bis(Diphenyl Phosphate) (RDP), grade Fyrolflex® RDP from Supresta |
| D2 | Bisphenol-A bis(diphenyl phosphate) (BPADP), grade FP700 from Adeka |
| D3 | N/P-based FR, ADEKA FP2100J |
| E | Epoxidized novolac DEN-438 |
| F | Anti-drip agent, T-San, AD-001 |
| G1 | Anti-oxidant, Irganox™ 1010 from Ciba Specialty Chemicals |
| G2 | Processing stabilizer, Irgafos™ 168 from Ciba Specialty Chemicals |

The compositions shown in Table 1 are prepared on a laboratory Brabender (lobed batch type) mixer and evaluated for extrusion characteristics and key properties. The following steps are used in the material preparation and evaluations:

The laboratory batch mixer heater settings are at 190°C and mixer was preheated to this temperature.

At 10 RPM mixer rotor speed, all of the TPU (and optional EVA resin) are added, flame retardant (FR) is added to provide good fill of the entire mixing bowl. As these materials are heated, the remaining powder FR is added to the mixture. Then liquid phosphate and epoxidized novolac are gradually spooned into the mixer. Then Irganox 1010 and Irgafos 168 additives are added.

After all raw materials are incorporated into the melt, the mixer rotor speed is increased to 45 RPM's and the batch is mixed for 8 min to 18 min.

To facilitate removal of the sticky melt batch, the mixer temperature is reset to 125°C and the rotor speed is reduced to 5 RPM to allow the batch to cool. The batch solidifies as it cools and is removed by the typical disassembly and removal of the mixer body.

A compression molded plaque is prepared at a 185°C molding temperature, using a low pressure cycle to facilitate melting, and then a high pressure cycle to shape the 1.4x200x200mm plaque (0.075"x8.0"x8.0") and then the mold is held at high pressure (15 MPa) and cooled to room temperature over a period of 8 min to solidify the plaque. ASTM D-638 Type IV tensile testing bars are then punched from this plaque using a dog-bone cutter in an arbor press.

Examples #1 and #2 in Table 2 below show dramatic improvement in flame retardant performance compared to comparative sample 1. Examples #1 and #2 show no dripping during burning. Examples #1 and #2 also exhibit good tensile performance suitable for flexible wire and cable applications.

**Table 2**

| | | Comparative Sample #1 | Example #1 | Example #2 |
|---|---|---|---|---|
| RM Name Proportions are in wt % based on the total weight of the composition | Description | | | |
| 2355-75A | Polyester TPU | 42.1 | 41.1 | 41.1 |
| Elvax 265 | EVA with 28% VA | 22.7 | 22.1 | 22.1 |
| Adeka FP-2100J | N/P-based flame retardant | 25 | 25 | 25 |
| FP-600 | Adeka BPADP | 10 | 10 | 10 |
| DEN438 | Epoxidized novolac | | 2 | 2 |
| Irpaphos 168 | phosphite | 0.1 | 0.1 | 0.1 |
| Irganox 1010 | Anti-oxidant | 0.3 | 0.3 | 0.3 |
| | | | | |
| Tensile bar without aging | Tensile elongation at break % | 464 | 505 | 505 |
| | Tensile strength at break psi | 1084 | 1029 | 1029 |
| | Secant 2% modulus MPa | 16 | 12.8 | 12.8 |
| Tensile bar aged under 100°C for 7 days | Tensile elongation at break % | 83.3 | 466.8 | 466.8 |
| | Tensile strength at break psi | 296.5 | 976.8 | 976.8 |
| | Secant 2% modulus MPa | 7.3 | 16.5 | 16.5 |
| | Tensile elongation retention after aging % | 18.0 | 88.5 | 88.5 |
| Tensile elongation retention after aging % | | 18.0 | 88.5 | 88.5 |
| VW-1 test pass/total | | 0/5 | 3/5 | 3/5 |
| Dripping | | yes | no | no |

Table 3 below provides another example of epoxidized novolac as antidripping additive in TPU. The FR package includes a liquid phosphate such as RDP, a solid N/P-based FR such as FP2100J and melamine cyanurate. Comparative sample #2 contains 0.5 wt % antidripping additive ADP-01, which is SAN grafted PTFE. Comparative sample #2 fails the drip test. Example #3 is comparative Example #2 with 2 wt % epoxidized novolac resin. All specimens for Example #3 exhibit superior char forming performance and no dripping. Three out of 5 specimens of Example #3 pass the drip test.

**Table 3**

| RM Name Proportions are in wt % based on the total weight of the composition | Description | Comparative sample #2 | Example #3 |
|---|---|---|---|
| 2355-75A | TPU | 39.6 | 37.6 |
| Elvax 265 | 28% VA EVA | 20.2 | 20.2 |
| | RDP | 10 | 10 |
| DEN638 | Novolac | | 2 |
| Adeka FP2100J | N/P-based flame retardant | 15 | 15 |
| Budit 314 | Melamine cyanurate | 15 | 15 |
| ADP-01 | TSAN | 0.5 | |
| Irgaphos 168 | phosphite | 0.1 | 0.1 |
| Irganox 1010 | Anti-oxidant | 0.3 | 0.3 |
| | | | |
| Tensile elongation at break | % | 510 | 494 |
| Tensile strength at break | psi | 1662 | 1075 |
| Secant 2% modulus | MPa | 18.5 | |
| | | | |
| Strip test w/o flag burning | | 0/3 | 3/5 |
| Uncharred length | mm | --- | 28 |
| dripping | | yes | no |

Table 4 presents another example of epoxidized novolac as antidripping additive in TPU composition. Comparative sample #3 contains no epoxidized novolac and fails both the VW-1 test and the drip test. Comparative Example #4 is similar to comparative sample #3 yet contains 2 wt % epoxidized novolac. Comparative Example #4 shows strengthened char and does not drip, passing the drip test. This enables Comparative Example #4 to pass the stringent VW-1 test.

**Table 4**

| RM Name Proportions are in wt % based on the total weight of the composition | Comparative sample #3 | Comparative Example #4 |
|---|---|---|
| TPU3/2103-90 | 40 | 40 |
| ATH | 40 | 40 |
| RDP | 20 | 18 |
| AD-001 (T-San) | 0.4 | 0.4 |
| Irgaphos 168 (phosphate) | 0.1 | 0.1 |
| Irgaox1010 (anti-oxidant) | 0.6 | 0.6 |
| Epoxy Novolac DEN438 | | 2 |
| | | |
| Tensile Strength, MPa | 8.77 | 9.64 |
| Tensile Elongation, % | 570 | 381 |
| VW-1 test pass ratio | 0/4 | 5/5 |
| Dripping during burning | yes | No |

## Claims

1. A composition comprising:
from 15 wt% to 60 wt% of a thermoplastic polyurethane (TPU);
from 15 wt% to 40 wt% of a flame retardant selected from the group consisting of (a) a blend of a metal hydrate and a phosphorus-based flame retardant, (b) a blend of a nitrogen/phosphorus-based flame retardant and a phosphorus-based flame retardant, and (c) a blend of a metal hydrate and a polyphosphate flame retardant; and
from 0.01 wt% to 20 wt% of an epoxidized novolac resin.

2. The composition of claim 1 further comprising a polar olefin-based polymer.

3. The composition of claim 2 comprising:
from 30 wt % to 50 wt % TPU;
from 5 wt % to 25 wt % ethylene vinyl acetate;
from 15 wt % to 40 wt % flame retardant; and
from 0.1 wt % to 5 wt % epoxidized novolac resin.

4. The composition of any of claims 1 to 3 wherein the flame retardant is a blend of a nitrogen/phosphorus-based flame retardant and a phosphorus-based flame retardant.

5. The composition of any of claims 1 to 3 wherein the flame retardant is a blend of a metal hydrate and a phosphorus-based flame retardant.

6. The composition of claim 1 comprising from 0.5 wt% to 8 wt% epoxidized novolac resin.

7. The composition of any of claims 1 to 6 wherein the epoxidized novolac resin has the structure 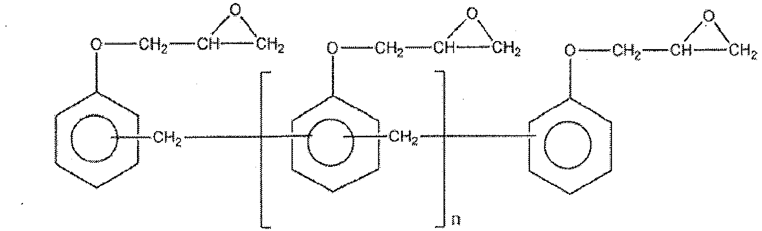 wherein n is an integer from 1 to 1000.

8. An article comprising:
at least one component composed of the composition of any of claims 1 to 7.

9. The article of claim 8 comprising a metal conductor and a coating on the metal conductor, the coating comprising the composition.

10. The article of claims 8 or 9 wherein the coated metal conductor has a VW-1 rating as determined in accordance with method 1080 of UL-1581.

## Patentansprüche

1. Eine Zusammensetzung, die Folgendes beinhaltet:
zu 15 Gew.-% bis 60 Gew.-% ein thermoplastisches Polyurethan (TPU);
zu 15 Gew.-% bis 40 Gew.-% ein Flammschutzmittel, das ausgewählt ist aus der Gruppe, bestehend aus (a) einem Gemisch aus einem Metallhydrat und einem Flammschutzmittel auf Phosphorbasis, (b) einem Gemisch aus einem Flammschutzmittel auf Stickstoff/Phosphorbasis und einem Flammschutzmittel auf Phosphorbasis und (c) einem Gemisch aus einem Metallhydrat und einem Polyphosphat-Flammschutzmittel; und
zu 0,01 Gew.-% bis 20 Gew.-% ein epoxidiertes Novolakharz.

2. Zusammensetzung gemäß Anspruch 1, die ferner ein polares Polymer auf Olefinbasis beinhaltet.

3. Zusammensetzung gemäß Anspruch 2, die Folgendes beinhaltet:
zu 30 Gew.-% bis 50 Gew.-% TPU;
zu 5 Gew.-% bis 25 Gew.-% Ethylen-Vinyl-Acetat;
zu 15 Gew.-% bis 40 Gew.-% Flammschutzmittel; und
zu 0,1 Gew.-% bis 5 Gew.-% epoxidiertes Novolakharz.

4. Zusammensetzung gemäß einem der Ansprüche 1 bis 3, wobei das Flammschutzmittel ein Gemisch aus einem Flammschutzmittel auf Stickstoff/Phosphorbasis und einem Flammschutzmittel auf Phosphorbasis ist.

5. Zusammensetzung gemäß einem der Ansprüche 1 bis 3, wobei das Flammschutzmittel ein Gemisch aus einem Metallhydrat und einem Flammschutzmittel auf Phosphorbasis ist.

6. Zusammensetzung gemäß Anspruch 1, die zu 0,5 Gew.-% bis 8 Gew.-% epoxidiertes Novolakharz beinhaltet.

7. Zusammensetzung gemäß einem der Ansprüche 1 bis 6, wobei das epoxidierte Novolakharz die folgende Struktur aufweist: 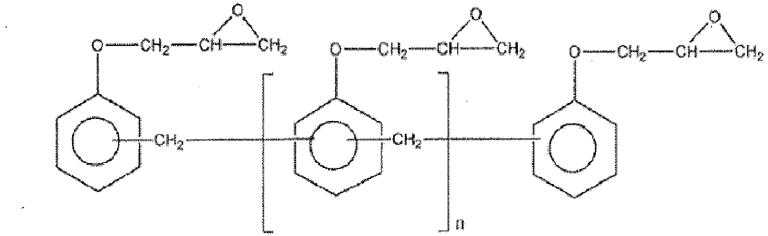 wobei n eine ganze Zahl von 1 bis 1 000 ist.

8. Ein Artikel, der Folgendes beinhaltet:
mindestens eine Komponente, die aus der Zusammensetzung gemäß einem der Ansprüche 1 bis 7 zusammengesetzt ist.

9. Artikel gemäß Anspruch 8, der einen Metallleiter und eine Beschichtung auf dem Metallleiter beinhaltet, wobei die Beschichtung die Zusammensetzung beinhaltet.

10. Artikel gemäß Anspruch 8 oder 9, wobei der beschichtete Metallleiter eine VW-1-Bewertung aufweist, wie gemäß dem Verfahren 1080 von UL-1581 bestimmt.

## Revendications

1. Une composition comprenant :
de 15 % en poids à 60 % en poids d'un polyuréthane thermoplastique (TPU) ;
de 15 % en poids à 40 % en poids d'un agent ignifugeant sélectionné dans le groupe consistant en (a) un mélange homogène d'un hydrate métallique et d'un agent ignifugeant à base de phosphore, (b) un mélange homogène d'un agent ignifugeant à base d'azote/phosphore et d'un agent ignifugeant à base de phosphore, et (c) un mélange homogène d'un hydrate métallique et d'un agent ignifugeant polyphosphate ;
et
de 0,01 % en poids à 20 % en poids d'une résine novolaque époxydée.

2. La composition de la revendication 1 comprenant en outre un polymère à base d'oléfine polaire.

3. La composition de la revendication 2 comprenant :
de 30 % en poids à 50 % en poids de TPU ;
de 5 % en poids à 25 % en poids d'éthylène acétate de vinyle ;
de 15 % en poids à 40 % en poids d'agent ignifugeant ; et
de 0,1 % en poids à 5 % en poids de résine novolaque époxydée.

4. La composition de n'importe lesquelles des revendications 1 à 3 dans laquelle l'agent ignifugeant est un mélange homogène d'un agent ignifugeant à base d'azote/phosphore et d'un agent ignifugeant à base de phosphore.

5. La composition de n'importe lesquelles des revendications 1 à 3 dans laquelle l'agent ignifugeant est un mélange homogène d'un hydrate métallique et d'un agent ignifugeant à base de phosphore.

6. La composition de la revendication 1 comprenant de 0,5 % en poids à 8 % en poids de résine novolaque époxydée.

7. La composition de n'importe lesquelles des revendications 1 à 6 dans laquelle la résine novolaque époxydée a la structure 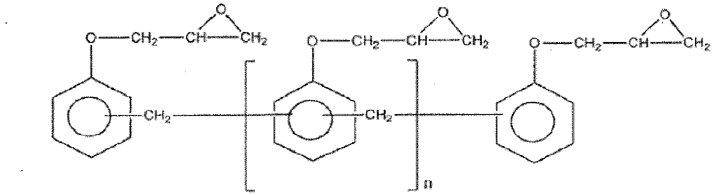 dans laquelle n est un entier allant de 1 à 1000.

8. Un article comprenant :
au moins un composant constitué de la composition de n'importe lesquelles des revendications 1 à 7.

9. L'article de la revendication 8 comprenant un conducteur métallique et un revêtement sur le conducteur métallique, le revêtement comprenant la composition.

10. L'article des revendications 8 ou 9 dans lequel le conducteur métallique revêtu a une classification VW-1 telle que déterminée conformément à la méthode 1080 d'UL-1581.
